# DEMANDE DE BREVET EUROPEEN

(11) **EP 3 539 386 A1**
(43) Date de publication de la demande: **18.09.2019**
(21) Numéro de dépôt: 19162873.4
(22) Date de dépôt: 14.03.2019
(51) Int. Cl.: A22C 21/06

(54) **MACHINE INTELLIGENTE POUR UNE LIGNE D'EVISCERATION DE VOLAILLES**

(30) Priorité: 15.03.2018 FR 1852214
(71) Demandeur: Etablissements J.P. Bayle, 42480 La Fouillouse (FR)
(72) Inventeur: ROCHE, Jean-Georges, 42330 Saint-Bonnet-Les-Oules (FR)
(74) Mandataire: Cabinet Laurent & Charras

(57) **Abrégé**

La présente invention concerne une machine (1) pour une ligne d'éviscération de volailles (2), comprenant : un cadre (10) incluant une base (12), un montant latéral (14) vertical et un montant supérieur (16) horizontal ; et un arbre (20) disposé verticalement entre la base (12) et le montant supérieur (16). La machine (1) est caractérisée en ce qu'elle comprend également : au moins un vérin électrique (30 ; 30, 80, 90) actionnant un dispositif mobile (32 ; 32, 82, 92) de la machine (1) ; et une unité de commande (40) pilotant le vérin électrique (30 ; 30, 80, 90).

## Description

La présente invention concerne une machine pour une ligne d'éviscération de volailles, tel que les canards ou les poulets.

De manière classique, une telle machine comprend un arbre central plein supporté par un cadre, et différents vérins hydrauliques pour actionner les différents sous-systèmes. Cependant, avec une telle construction, la machine ne peut pas être adaptée à différents types de volailles, présentant des dimensions différentes. De plus, la commande par vérins hydrauliques n'est pas entièrement satisfaisante, en terme de précision de réglage.

CN202999192U décrit un exemple de machine hydraulique selon l'état de la technique, conforme au préambule de la revendication 1. La machine comprend un vérin hydraulique en partie basse, piloté par une pompe hydraulique.

Le but de la présente invention est de proposer une machine améliorée.

A cet effet, l'invention a pour objet une machine pour une ligne d'éviscération de volailles, comprenant un cadre incluant une base, un montant latéral vertical et un montant supérieur horizontal ; et un arbre disposé verticalement entre la base et le montant supérieur.

La machine est caractérisée en ce qu'elle comprend également : au moins un vérin électrique actionnant un dispositif mobile de la machine ; et une unité de commande pilotant le vérin électrique.

Ainsi, l'invention permet de régler la machine avec plus de facilité et de précision, pour l'adapter à différents types de volailles. La machine peut être adaptée à différentes espèces, tels que les canards et poulets, et à différents gabarits au sein d'une même espèce. Par exemple, la machine peut être facilement adaptée aux canards Pékin, Barbarie ou Mulard, en fonction de la production souhaitée.

En outre, l'invention peut être mise en oeuvre pour toute une gamme de machines pour une ligne d'éviscération de volailles, telles qu'un éviscérateur, un aspirateur à poumons, une déjaboteuse.

De plus, l'invention offre la possibilité de piloter tous les sous-systèmes de la machine avec une unique unité de commande, au lieu d'avoir une commande pour chaque sous-système.

La polyvalence et l'ergonomie de la machine sont donc grandement améliorées.

Selon d'autres caractéristiques avantageuses de l'invention, prises isolément ou en combinaison :
- L'unité de commande est logée dans le montant latéral du cadre.
- Le ou les vérins électriques sont disposés en partie médiane de la machine, entre la base et le montant supérieur, et non dans la base ou les montants.
- Le ou les vérins électriques et l'unité de commande sont reliés par des câbles électriques passant à travers une partie supérieure creuse de l'arbre et à travers le montant supérieur du cadre.
- La machine comprend un écran de contrôle qui est connecté à l'unité de commande et qui est disposé sur le montant latéral ou déporté à un autre emplacement de la machine.
- La machine comprend un dispositif de surveillance d'un couple maître entre l'arbre et la base.
- L'arbre comprend une partie inférieure fixée à la base et une partie supérieure montée en liaison glissière par rapport au montant supérieur.
- La machine comporte une cage, du type cage écureuil, dans laquelle sont logés le ou les vérins électriques.
- La cage est montée en liaison pivot par rapport à la partie inférieure et en liaison pivot glissant par rapport à la partie supérieure de l'arbre.
- La machine comprend un vérin électrique qui actionne un dispositif de réglage de la hauteur d'entrecuisse de la volaille et qui est piloté par l'unité de commande.
- Ce vérin électrique est disposé entre la partie inférieure et la partie supérieure de l'arbre, pour régler la longueur de l'arbre.
- La machine comprend un vérin électrique qui actionne un dispositif de réglage de position d'outil et qui est piloté par l'unité de commande.
- La machine comprend un vérin électrique qui actionne un dispositif de maintien en position de la volaille et qui est piloté par l'unité de commande.
- L'unité de commande pilote tous les sous-systèmes de la machine.
- Le cadre inclut un unique montant latéral et présente une forme de C.
- Le cadre inclut deux montants latéraux et présente une forme de O.

L'invention sera mieux comprise à la lecture de la description qui va suivre, donnée uniquement à titre d'exemple non limitatif et faite en référence aux dessins annexés sur lesquels :
- la figure 1 est une représentation schématique en coupe transversale d'une machine conforme à l'invention, du type éviscérateur de canards ;
- la figure 2 est une vue de côté du cadre de la machine, en forme de C ;
- la figure 3 est une vue en perspective du cadre de la machine ;
- la figure 4 est une vue de détail de l'unité de contrôle agencée dans un montant vertical latéral du cadre de la machine ;
- la figure 5 est une vue de côté du carrousel équipant la machine ;
- la figure 6 est une vue en coupe selon la ligne VI-VI à la figure 5, montrant l'arbre central de la machine ;
- la figure 7 est une vue en perspective partielle d'une machine conforme à un deuxième mode de réalisation de l'invention, comprenant un écran déporté ; et
- la figure 8 est une vue en perspective partielle d'une machine conforme à un troisième mode de réalisation de l'invention, comprenant un cadre en forme de O.

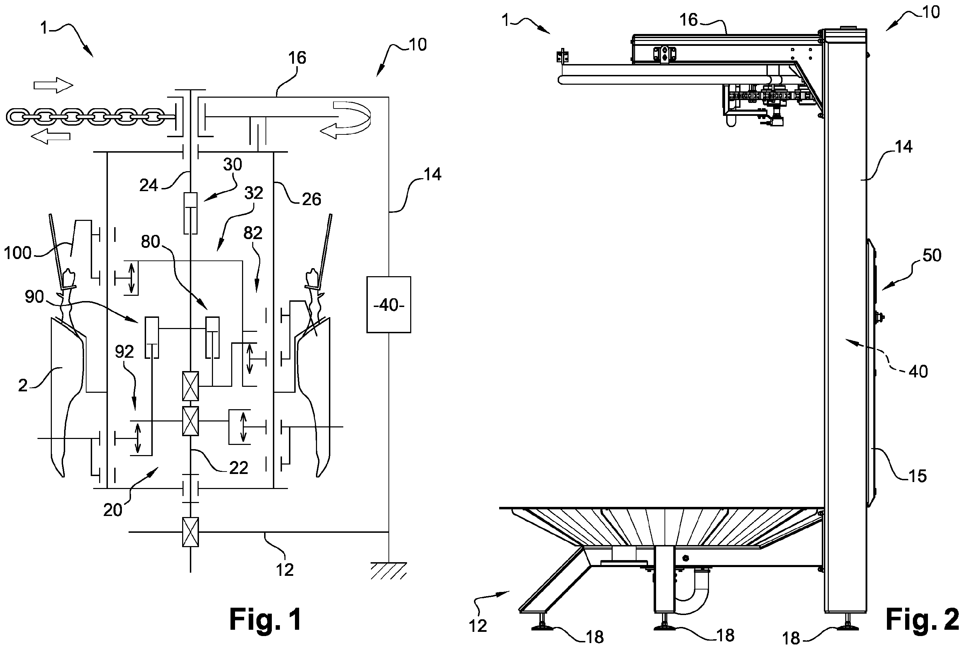

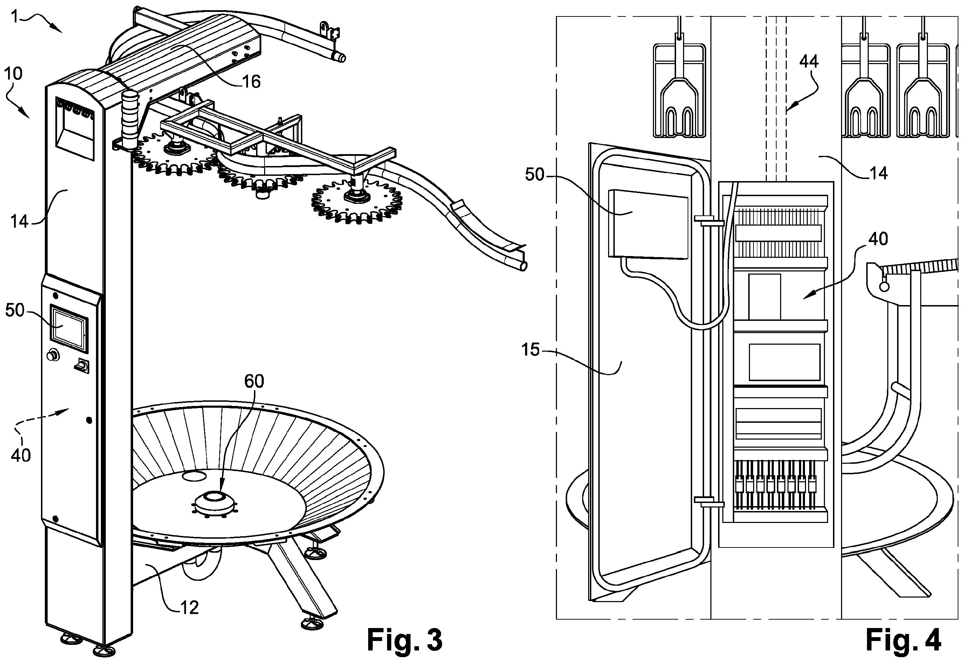

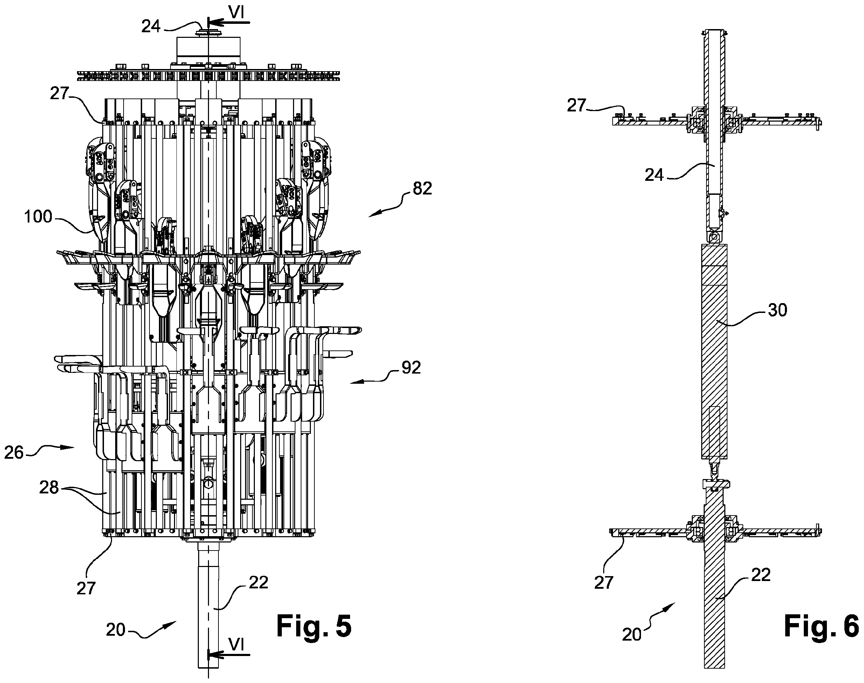

Sur les figures 1 à 6 est représentée une machine (1) conforme à l'invention, du type éviscérateur, pour une ligne d'éviscération de canards (2).

La machine (1) comprend un cadre (10), un arbre central (20), des vérins électriques (30, 80, 90), une unité de commande (40) et un écran de contrôle (50).

Le cadre (10) inclut une base inférieure (12), un montant latéral (14) vertical et un montant supérieur (16) horizontal. Le cadre (10) comprend différents pieds (18) positionnés sous la base (12) et le montant latéral (14). Les pieds (18) sont répartis pour procurer une stabilité optimale à la machine (1). Le cadre (10) présente une forme de C à angles droits.

L'arbre central (20) s'étend verticalement entre la base (12) et le montant supérieur (16). L'arbre (20) comprend une partie inférieure (22) fixée à la base (12) et une partie supérieure (24) montée en liaison glissière par rapport au montant supérieur (16).

La machine (1) comporte une cage (26), du type cage écureuil, montée en liaison pivot par rapport à la partie inférieure (22) et en liaison pivot glissant par rapport à la partie supérieure (24) de l'arbre (20). La cage (26) comprend deux plateaux horizontaux (27) et un ensemble de colonnes verticales (28) reliant les deux plateaux (27).

Le vérin électrique (30) est disposé entre la partie inférieure (22) et la partie supérieure (24) de l'arbre (20). Le vérin (30) permet de régler la longueur de l'arbre (20), et donc la hauteur de la cage (26), au sein de la machine (1). Ainsi, le vérin (30) permet d'actionner un dispositif (32) de réglage de la hauteur d'entrecuisse du canard (2), comprenant l'arbre (20) et la cage (26).

De manière avantageuse, les vérins (80, 90) sont disposés dans l'espace intérieur défini entre l'arbre (20) et la cage (26).

Le vérin électrique (80) actionne un dispositif (82) de réglage en position d'un outil (100) conçu pour extraire les viscères du canard (2).

Le vérin électrique (90) qui actionne un dispositif (92) de maintien en position du canard (2), notamment lorsque l'outil (100) pénètre dans le canard (2).

La cage (26), les vérins (80, 90) et les dispositifs (82, 92) forment un carrousel mobile en rotation autour de l'arbre (20), au creux du C formé par le cadre (10).

L'unité de commande (40) est conçue pour piloter les vérins électriques (30, 80, 90), ainsi que d'autres sous-systèmes de la machine (1). Avantageusement, l'unité (40) peut piloter tous les sous-systèmes de la machine (1), au lieu d'avoir une commande pour chaque sous-système.

L'unité (40) est logée dans le montant latéral (14) du cadre (10). Les vérins électriques (30, 80, 90) et l'unité de commande (40) sont reliés par des câbles électriques (44). Les câbles (44) sont connectés aux vérins (30, 80, 90), remontent dans la cage (26) le long de l'arbre (20), passent à travers le montant supérieur (16), puis redescendant dans le montant latéral (14), pour être connecté à l'unité de commande (40).

De préférence, l'unité (40) comprend un automate programmable.

Grâce aux vérins électriques (30, 80, 90) et à l'unité de commande (40), la précision de réglage de la machine (1) est fortement améliorée.

L'écran de contrôle (50) est connecté à l'unité de commande (40), pour afficher des informations relatives au fonctionnement de la machine (1), et recevoir des instructions d'un opérateur. L'écran (50) est de préférence un écran tactile. L'écran (50) est disposé sur le montant latéral (14), plus précisément sur une porte (15) d'accès à l'unité (40) disposée dans le montant (14). En alternative, l'écran (50) peut être déporté à un autre emplacement de la machine (1), à distance de l'unité de commande (40).

De préférence, la machine (1) comprend un dispositif (60) de surveillance d'un couple maître entre l'arbre central (20) et la base (12). Le dispositif (60) est connecté à l'unité de commande (40). Le dispositif (60) permet un arrête de sécurité de la machine (1) si un couple seuil prédéfini est dépassé.

Avantageusement, l'unité de commande (40) permet de piloter tous les sous-systèmes de la machine (1) :
- le dispositif (32) de réglage de la hauteur d'entrecuisse du canard (2) ;
- le dispositif (82) de réglage en position de l'outil (100) ;
- le dispositif (92) de maintien en position du canard (2) ;
- les deux électrovannes de lavage automatique, contrôlant l'arrivée d'eau dans la machine (1), l'une pour le nettoyage d'un poste donné à chaque passage d'un canard (2), l'autre pour le nettoyage complet de la machine (1) lors d'une pause entre deux productions ;
- les moteurs électriques des accessoires pouvant équiper la machine (1) : scie, brosse, etc.

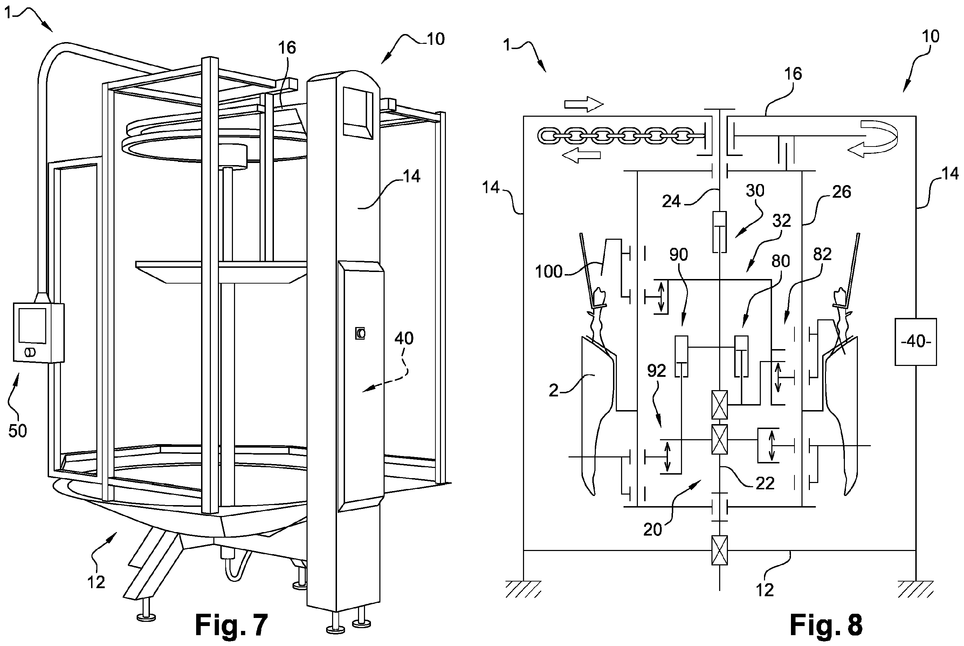

D'autres modes de réalisation de machines (1) conformes à l'invention sont montrés aux figures 7 et 8. Certains éléments constitutifs de ces machines (1) sont comparables à ceux du premier mode de réalisation décrit plus haut et, dans un but de simplification, portent les mêmes références numériques.

Sur la figure 7, la machine (1) est du type aspirateur à poumons. Le cadre (10) supporte une grille de protection, dont le grillage n'est pas représenté dans un but de simplification. De même, le carrousel n'est pas représenté L'écran (50) est déporté à distance du montant latéral (14) et de l'unité de commande (40).

Sur la figure 8, la machine (1) est du type éviscérateur, dont le cadre (10) inclut deux montants latéraux (14). Chaque montant (14) est fixé à la base (12) et au montant supérieur (16). Le cadre (10) présente une forme de O à angles droits.

Par ailleurs, la machine (1) peut être conformée différemment des figures 1 à 8 sans sortir du cadre de l'invention.

En outre, les caractéristiques techniques des différents modes de réalisation et variantes mentionnés ci-dessus peuvent être, en totalité ou pour certaines d'entre elles, combinées entre elles.

Ainsi, la machine (1) peut être adaptée en termes de coût, d'ergonomie, de fonctionnalités et de performance.

## Revendications

1. Machine (1) pour une ligne d'éviscération de volailles (2), comprenant :
- un cadre (10) incluant une base (12), un montant latéral (14) vertical et un montant supérieur (16) horizontal ; et
- un arbre (20) disposé verticalement entre la base (12) et le montant supérieur (16) ;
**caractérisée en ce que** la machine (1) comprend également :
- au moins un vérin électrique (30 ; 30, 80, 90) actionnant un dispositif mobile (32 ; 32, 82, 92) de la machine (1) ; et
- une unité de commande (40) pilotant le vérin électrique (30 ; 30, 80, 90).

2. Machine (1) selon la revendication précédente, **caractérisée en ce que** l'unité de commande (40) est logée dans le montant latéral (14) du cadre (10).

3. Machine (1) selon l'une quelconque des revendications précédentes, **caractérisée en ce que** le ou les vérins électriques (30 ; 30, 80, 90) sont disposés en partie médiane de la machine (1), entre la base (12) et le montant supérieur (16).

4. Machine (1) selon l'une quelconque des revendications précédentes, **caractérisée en ce que** le ou les vérins électriques (30 ; 30, 80, 90) et l'unité de commande (40) sont reliés par des câbles électriques (44) passant à travers une partie supérieure creuse (24) de l'arbre (20) et à travers le montant supérieur (16) du cadre (10).

5. Machine (1) selon l'une quelconque des revendications précédentes, **caractérisée en ce qu'**elle comprend un écran de contrôle (50) qui est connecté à l'unité de commande (40) et qui est disposé sur le montant latéral (14) ou déporté à un autre emplacement de la machine (1).

6. Machine (1) selon l'une quelconque des revendications précédentes, **caractérisée en ce qu'**elle comprend un dispositif (60) de surveillance d'un couple maître entre l'arbre (20) et la base (12).

7. Machine (1) selon l'une quelconque des revendications précédentes, **caractérisée en ce que** l'arbre (20) comprend une partie inférieure (22) fixée à la base (12) et une partie supérieure (24) montée en liaison glissière par rapport au montant supérieur (16).

8. Machine (1) selon l'une quelconque des revendications précédentes, **caractérisée en ce qu'**elle comporte une cage (26) dans laquelle sont logés le ou les vérins électriques (30 ; 30, 80, 90).

9. Machine (1) selon les revendications 7 et 8, **caractérisée en ce que** la cage (26) est montée en liaison pivot par rapport à la partie inférieure (22) et en liaison pivot glissant par rapport à la partie supérieure (24) de l'arbre (20).

10. Machine (1) selon l'une quelconque des revendications précédentes, **caractérisée en ce qu'**elle comprend un vérin électrique (30) qui actionne un dispositif (32) de réglage de la hauteur d'entrecuisse de la volaille (2) et qui est piloté par l'unité de commande (40).

11. Machine (1) selon l'une quelconque des revendications précédentes, **caractérisée en ce qu'**elle comprend un vérin électrique (80) qui actionne un dispositif (82) de réglage de position d'un outil (100) et qui est piloté par l'unité de commande (40).

12. Machine (1) selon l'une quelconque des revendications précédentes, **caractérisée en ce qu'**elle comprend un vérin électrique (90) qui actionne un dispositif (92) de maintien en position de la volaille (2) et qui est piloté par l'unité de commande (40).

13. Machine (1) selon l'une quelconque des revendications 1 à 12, **caractérisée en ce que** le cadre (10) inclut un unique montant latéral (14) et présente une forme de C.

14. Machine (1) selon l'une quelconque des revendications 1 à 12, **caractérisée en ce que** le cadre (10) inclut deux montants latéraux (14) et présente une forme de O.
